**Europäisches Patentamt**

**European Patent Office**

**Office européen des brevets**

(11) Veröffentlichungsnummer : **0 166 854**
**B1**

(12) **EUROPÄISCHE PATENTSCHRIFT**

(45) Veröffentlichungstag der Patentschrift :
25.05.88

(51) Int. Cl.⁴ : **G 01 M 11/00**

(21) Anmeldenummer : **85101975.2**

(22) Anmeldetag : **22.02.85**

(54) **Verfahren und Anordnung zum Überprüfen eines Lichtwellenleiterkabels auf Lichtdurchgang und unzulässige Dämpfungserhöhung.**

(30) Priorität : 16.06.84 DE 3422513

(43) Veröffentlichungstag der Anmeldung :
08.01.86 Patentblatt 86/02

(45) Bekanntmachung des Hinweises auf die Patenterteilung : 25.05.88 Patentblatt 88/21

(84) Benannte Vertragsstaaten :
DE FR GB IT NL SE

(56) Entgegenhaltungen :
FR-A- 2 510 267
GB-A- 1 560 124
GB-A- 2 092 743

(73) Patentinhaber : **ANT Nachrichtentechnik GmbH**
**Gerberstrasse 33**
**D-7150 Backnang (DE)**

(72) Erfinder : **Form, Ernst**
**Theodor-Heuss-Strasse 51**
**D-7158 Sulzbach/Murr (DE)**

(74) Vertreter : **Wiechmann, Manfred, Dipl.-Ing.**
**ANT Nachrichtentechnik GmbH Gerberstrasse 33**
**Postfach 11 20**
**D-7150 Backnang (DE)**

## Beschreibung

Die vorliegende Erfindung betrifft ein Verfahren zum Überprüfen eines Lichtwellenleiterkabels auf Lichtdurchgang und auf eine durch Defekte verursachte unzulässige Dämpfungserhöhung, wobei eine Lichtimpulsfolge über das Lichtwellenleiterkabel übertragen wird, dann Licht, das durch Reflexionen über das Lichtwellenleiterkabel zurückgelangt, ausgekoppelt und in ein elektrisches Signal umgewandelt wird und daraus ein der Dämpfung des Lichtwellenleiterkabels entsprechendes Signal abgeleitet wird.

Ein derartiges Verfahren geht aus der GB-A-2 092 743 hervor. Allerdings wird hier das sogenannte Rückstreumeßverfahren angewendet ; d. h. die durch einen Lichtwellenleiter verursachte Dämpfung wird aus den Lichtanteilen abgeleitet, die an Inhomogenitäten oder Störstellen im Lichtwellenleiter rückgestreut werden. Ein ebensolches Rückstreumeßverfahren ist in der GB-A-1 560 125 beschrieben.

Ein anderes Verfahren, welches aus der FR-A-2 510 267 bekannt ist, besteht darin, daß in ein Ende eines Lichtwellenleiters Licht eingespeist wird und aus der Leistung des am gegenüberliegenden Ende austretenden Lichts die durch den Lichtwellenleiter verursachte Dämpfung ermittelt wird.

Eine Lichtwellenleiterkabelstrecke wird üblicherweise aus mehreren einzelnen Kabellängeneinheiten (z. B. 1 km Länge) zusammengesetzt. Nach dem Verlegen einer jeden Kabellängeneinheit ist es erforderlich, das gesamte Kabel mit der zuletzt verlegten Längeneinheit auf Lichtdurchgang zu überprüfen und auch genauer festzustellen, ob nicht die Kabelstrecke z. B. durch Bruch eines Lichtwellenleiters oder Defekt einer Spleißstelle bzw. eines Steckers eine unzulässig höhe Dämpfung aufweist.

Für eine solche Überprüfung eines Lichtwellenleiterkabels ein unkompliziertes, schnell durchführbares Verfahren anzugeben, ist die Aufgabe der vorliegenden Erfindung.

Gelöst wird diese Aufgabe durch die im Kennzeichen des Patentanspruchs 1 angegebenen Merkmale.

Eine zweckmäßige Ausführung des erfindungsgemäßen Verfahrens und vorteilhafte Schaltungsanordnungen zur Durchführung dieses Verfahrens gehen aus den Ansprüchen 2-4 hervor.

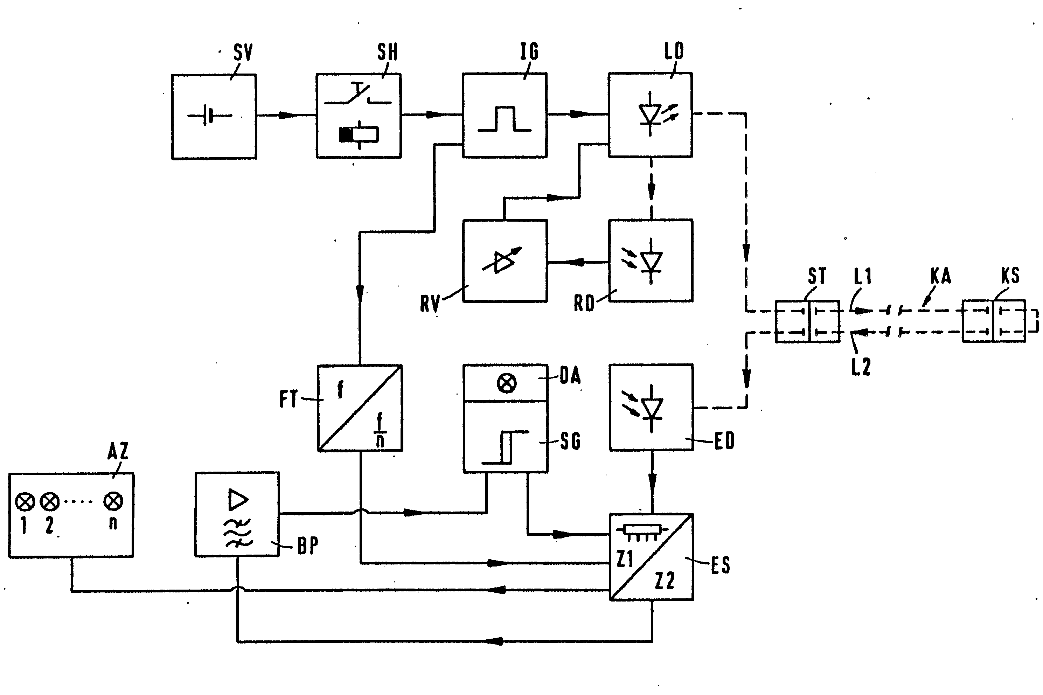

Anhand eines in der Zeichnung dargestellten Ausführungsbeispiels wird nun die Erfindung näher beschrieben.

Die Figur zeigt ein Blockschaltbild, woran ein Verfahren zum Überprüfen eines Lichtwellenleiterkabels KA auf Lichtdurchgang und auf unzulässige, durch Defekte hervorgerufene Dämpfungserhöhung erläutert werden soll.

Mit Hilfe eines Schalters SH wird eine Stromversorgungseinheit SV an einen Impulsgeber IG geschaltet, der eine elektrische Impulsfolge Mit der Folgefrequenz von z. B. 80 Hz und einer Impulsbreite von z. B. 1 ms an eine Laserdiode LD abgibt.

Die entsprechende von der Laserdiode LD erzeugte Lichtimpulsfolge wird in einen Lichtwellenleiter L1 des Kabels, das mittels eines Steckers ST an das Prüfgerät angeschlossen ist, eingespeist. Damit die Ausgangsleistung der Laserdiode LD konstant bleibt, ist eine Regelschleife vorgesehen, bestehend aus einer Photodiode RD, die das optische Ausgangssignal der Laserdiode in ein elektrisches Signal umwandelt, und einem Regelverstärker RV, der, gesteuert von dem elektrischen Ausgangssignal der Photodiode RD, die Betriebsleistung der Laserdiode LD regelt.

Am entfernten Ende ist das Kabel KA mit einem Kurzschlußstecker KS überbrückt, so daß die in den Lichtwellenleiter L1 eingespeiste Lichtimpulsfolge über einen zweiten Lichtwellenleiter L2 zurückgeführt wird.

Eine Empfangsdiode ED wandelt die über den zweiten Lichtwellenleiter L2 ankommende Lichtimpulsfolge· in ein entsprechendes elektrisches Signal um. Dieses Signal wird dann über einen Empfindlichkeitssteller ES geleitet, der als Impedanzwandler mit einem Eingangswiderstand Z1 und einem konstanten Ausgangswiderstand Z2 ausgeführt ist. Der Eingangswiderstand Z1 besitzt eine variable Widerstandsstufung, so daß der Empfindlichkeitssteller ES auf verschiedene Empfindlichkeitsstufen geschaltet werden kann. Es sollten soviele Empfindlichkeitsstufen vorgesehen werden wie maximal Kabellängeneinheiten auf einer Kabelstrecke aneinandergereiht werden.

Bei einem Prüfvorgang wird der Empfindlichkeitssteller ES, beginnend bei der niedrigsten Empfindlichkeitsstufe, schrittweise jeweils um einen der bekannten Dämpfung einer Kabellängeneinheit proportionalen Empfindlichkeitswert heraufgeschaltet. Die Schaltfrequenz (ca. 2 Hz) für den Empfindlichkeitssteller ES wird mittels eines Frequenzteiles FT aus der Impulsfolgefrequenz des Impulsgebers IG abgeleitet.

Das Ausgangssignal des Empfindlichkeitsstellers ES wird über einen auf die Impulsfolgefrequenz abgestimmten Bandpaß BP an einen Schwellwertgeber SG geführt. Die Schwelle dieses Schwellwertgebers und die Empfindlichkeitsstufen des Empfindlichkeitsstellers ES sind zusammen so auf die bekannte Dämpfung der ungestörten Kabellängeneinheit abgestimmt, daß das Ausgangssignal des Empfindlichkeitsstellers .immer gerade dann die Schwelle übersteigt, wenn die Zahl der nacheinander eingeschalteten Empfindlichkeitsstufen der Zahl der aneinandergereihten, ungestörten Kabellängeneinheiten entspricht. Hat also das Kabel nur eine Längeneinheit, so wird das Ausgangssignal des Empfindlichkeitsstellers ES bei der ersten, der niedrigsten Empfindlichkeitsstufe die Schwelle übersteigen, hat es zwei Längeneinheiten, so wird das Ausgangssignal des Empfindlichkeitsstellers ES bei der zweiten der nächst höheren, Empfindlichkeitsstufe die Schwelle übersteigen. Bei n Kabellängeneinheiten übersteigt das Ausgangssignal des Empfindlichkeitsstellers ES die Schwelle, wenn die n-te Empfindlichkeitsstufe eingeschaltet ist.

Jedesmal, wenn die Schwelle vom Ausgangssignal des Empfindlichkeitsstellers überschritten wird, leuchtet eine Durchgangsanzeige DA auf, denn dann hat das Kabel von dem in den Lichtwellenleiter L1 eingespeisten Licht zumindest einen Teil an den Ausgang des Lichtwellenleiters L2 übertragen und weist somit keine Unterbrechung auf. Sobald das Ausgangssignal des Empfindlichkeitsstellers ES die Schwelle übersteigt, steuert der Schwellwertgeber SG nicht nur die Durchgangsanzeige DA an, sondern er stoppt auch das weitere Heraufschalten des Empfindlichkeitsstellers ES.

In dem Moment, wo das Heraufschalten des Empfindlichkeitsstellers ES gestoppt wird, wird auch der Zählvorgang einer Anzeigeeinheit AZ unterbrochen, welche die nacheinander eingeschalteten Empfindlichkeitsstufen mitzählt und bei jeder eingeschalteten Empfindlichkeitsstufe eine Diode einer Leuchtdiodenkette 1, 2, ... n aufleuchten läßt.

Sind alle Längeneinheiten des nach dem oben beschriebenen Verfahren überprüften Kabels störungsfrei und besitzen ihre normale Dämpfung, so stimmt die auf der Anzeigeeinheit AZ wiedergegebene Zahl der nacheinander eingeschalteten Empfindlichkeitsstufen mit der tatsächlichen Zahl der verlegten Kabellängeneinheiten überein. Ergibt sich aber eine Differenz zwischen der Anzeige und der Anzahl der verlegten Kabellängen, so muß durch einen Defekt auf der Kabelstrecke eine unzulässig hohe Dämpfung aufgetreten sein. Wegen der überhöhten Dämpfung des Kabels schaltet nämlich der Empfindlichkeitssteller ES um mehr Empfindlichkeitsstufen herauf als bei einem ungestörten Kabel mit normaler Dämpfung und dementsprechend wird auch eine größere Zahl angezeigt als wirklich Kabellängen vorliegen.

**Patentansprüche**

1. Verfahren zum Überprüfen eines Lichtwellenleiterkabels auf Lichtdurchgang und auf eine durch Defekte verursachte, unzulässige Dämpfungserhöhung, wobei eine Lichtimpulsfolge über das lichtwellenleiterkabel übertragen wird, dann Licht, das durch Reflexion über das Lichtwellenleiterkabel zurückgelangt, ausgekoppelt und in ein elektrisches Signal umgewandelt wird und daraus ein der Dämpfung des Lichtwellenleiterkabels entsprechendes Signal abgeleitet wird, dadurch gekennzeichnet, daß in einen von mehreren Lichtwellenleitern (L1) des am entfernten Ende kurzgeschlossenen Kabels (KA), dessen Dämpfung pro Längeneinheit im ungestörten Zustand bekannt ist, die Lichtimpulsfolge eingespeist wird und diese über einen anderen Lichtwellenleiter (L2) an den Anfang des Kabels (KA) zurückgeführte, in ein proportionales elektrisches Signal umgewandelte Lichtimpulsfolge einem Empfindlichkeitssteller (ES) mit variabler gestufter Empfindlichkeit zugeführt wird, wobei die Zahl der Empfindlichkeitsstufen der maximal möglichen Zahl der aneinandergereihten Kabellängeneinheiten entspricht, daß die Empfindlichkeit beginnend mit der unempfindlichsten Stufe, schrittweise um jeweils einen der Dämpfung einer Kabellängeneinheit proportionalen Empfindlichkeitswert heraufgeschaltet wird, so daß das Ausgangssignal des Empfindlichkeitsstellers (ES) gerade dann die Schwelle eines Schwellwertgebers (SG) übersteigt, wenn die Zahl der nacheinander eingeschalteten Empfindlichkeitsstufen der Zahl der aneinander gereihten, ungestörten Kabellängeneinheiten entspricht, und daß, sobald am Ausgang des Schwellwertgebers (SG) ein Signal erscheint, der Lichtdurchgang des Kabels signalisiert wird und das Weiterschalten des Empfindlichkeitsstellers (ES) und gleichzeitig der Zählvorgang einer Anzeigeeinheit (AZ), welche die nacheinander eingeschalteten Empfindlichkeitsstufen und damit die aneinandergereihten ungestörten Kabellängeneinheiten zählt und deren Zahl anzeigt, gestoppt wird, wobei eine unzulässige Dämpfungserhöhung der Kabelstrecke vorliegt, wenn eine Differenz zwischen der Anzeige und der tatsächlichen Zahl der aneinandergereihten Kabellängeneinheiten festgestellt wird.

2. Verfahren nach Anspruch 1, dadurch gekennzeichnet, daß der Takt für das Durchschalten des Empfindlichkeitsstellers (ES) aus der Impulsfolgefrequenz, mit der die Lichtimpulse in das Kabel (KA) eingespeist werden, abgeleitet wird.

3. Schaltungsanordnung zur Durchführung des Verfahrens nach Anspruch 1, dadurch gekennzeichnet, daß der Empfindlichkeitssteller (ES) ein Impedanzwandler mit einem gestuft schaltbaren Eingangswiderstand (E1) und einem konstanten Ausgangswiderstand (E2) ist.

4. Schaltungsanordnung zur Durchführung des Verfahrens nach Anspruch 1, dadurch gekennzeichnet, daß die Anzeigeeinheit (AZ) eine Leuchtdiodenkette besitzt, in der bei fehlerfreier Kabelstrecke je nach Anzahl der aneinandergereihten Kabellängeneinheiten entsprechend viele Leuchtdioden (1, 2...n) aufleuchten.

**Claims**

1. Method of testing an optical cable for light transmission and undue attenuation increases caused by defects, wherein a train of light pulses is transmitted over said optical cable, then the light, which returns through the optical cable due to reflection, is coupled out and converted to an electrical signal from which a signal corresponding to the attenuation of the optical cable is derived, characterized in that said train of light pulses is fed into one of a plurality of optical conductors (L1) of the cable (KA) connected at the remote end whose attenuation per unit length in the state free of defects is known and said train of light pulses which is returned to the beginning of the cable (KA) via another optical conductor (L2) and converted to a proportional electrical signal is fed to a sensitivity control element (ES) having variable, stepped sensitivity levels, with the number of sensitivity levels corresponding to the maximum possible number of series-connected cable length units ; that, beginning with the most insensitive level, the sensitivity is switched up in steps each time by a sensitivity value proportional to the attenuation of one cable length unit so that the output signal of the sensitivity control element (ES) just exceeds the threshold of a sensing circuit when the number of successively switched on sensitivity levels corresponds to the number of series-connected cable length units that are free of defects ; and, as soon as a signal appears at the output of said sensing circuit (SG), passage of light through the cable is signaled and further advancing of the sensitivity control element (ES) and simultaneously the counting process of a display unit (AZ) for counting and displaying the number of successively switched on sensitivity levels and thus the number of series-connected cable length units free of defects is stopped, indicating an undue increase in attenuation in the cable path if a difference is found between the displayed number and the actual number of series-connected cable length units.

2. Method according to claim 1, characterized in that the clock pulse for switching through the sensitivity control element (ES) is derived from the pulse repetition rate with which the light pulses are fed into the cable (KA).

3. Circuit arrangement for implementing the method according to claim 1, characterized in that the sensitivity control element (ES) is an impedance converter including an input resistance (E1) which is switched in steps and a constant output resistance (E2).

4. Circuit arrangement for implementing the method according to claim 1, characterized in that the display unit (AZ) includes a chain of light emitting diodes in which, in a length of cable free of defects, the number of light emitting diodes (1, 2, ..., n) lighting up corresponds to the number of series-connected cable length units.

**Revendications**

1. Procédé de contrôle du passage de la lumière et d'un accroissement inadmissible de l'atténuation, provoqué par des défauts, dans un câble à fibres optiques, avec transmission dans ledit câble d'un train d'impulsions lumineuses, découplage puis conversion en un signal électrique de la lumière revenant par suite de réflexions dans le câble à fibres optiques, et production à partir dudit signal d'un signal correspondant à l'atténuation du câble à fibres optiques, ledit procédé étant caractérisé en ce que le train d'impulsions lumineuses est injecté dans une (L1) parmi plusieurs fibres optiques du câble (KA) court-circuité à l'extrémité lointaine et dont l'atténuation par unité de longueur est connue en l'absence de défaut, puis le train d'impulsions lumineuses ramené au début du câble (KA) par une autre fibre optique (L2) est converti en un signal électrique proportionnel qui est transmis à un dispositif de réglage de sensibilité (ES) à sensibilité échelonnée variable, le nombre de paliers de sensibilité étant égal au nombre maximal possible d'éléments de longueur de câble montés en série ; à partir du palier de sensibilité minimale, la sensibilité est commutée par valeurs croissantes, pas à pas et d'une valeur porportionnelle à l'atténuation d'une unité de longueur de câble, de sorte que le signal de sortie du dispositif de réglage de sensibilité (ES) dépasse le seuil d'un générateur de seuil (SG) exactement quand le nombre de paliers de sensibilité branchés successivement est égal à celui des éléments de longueur de câble sans défaut montés en série ; et, dès qu'un signal apparaît à la sortie du générateur de seuil (SG), le passage de la lumière dans le câble est signalé et la commutation du dispositif de réglage de sensibilité (ES) est arrêtée simultanément avec l'opération de comptage d'une unité d'affichage (AZ), qui compte les paliers de sensibilité branchés successivement et par suite les éléments de longueur de câble sans défaut montés en série et affiche leur nombre, un accroissement inadmissible de l'atténuation du tronçon de câble existant quand une différence est établie entre l'affichage et le nombre réel d'éléments de longueur de câble montés en série.

2. Procédé selon revendication 1, caractérisé en ce que la fréquence de commutation du dispositif de réglage de sensibilité (ES) est dérivée de la fréquence de répétition des impulsions à laquelle les impulsions lumineuses sont injectées dans le câble (KA).

3. Dispositif pour la mise en oeuvre du procédé selon revendication 1, caractérisé en ce que le dispositif de réglage de sensibilité (ES) est un transformateur d'impédance présentant une impédance d'entrée (E1) échelonnée commutable et une impédance de sortie (E2) constante.

4. Dispositif pour la mise en oeuvre du procédé selon revendication 1, caractérisé en ce que l'unité d'affichage (AZ) comprend une chaîne de diodes électroluminescentes (1, 2, ... n) dont un nombre égal à celui des éléments de longueur de câble montés en série s'allume dans le cas d'un tronçon de câble sans défaut.

**0 166 854**

1